# EUROPÄISCHE PATENTSCHRIFT

(11) **EP 3 332 681 B1**
(45) Veröffentlichungstag und Bekanntmachung des Hinweises auf die Patenterteilung: **23.10.2019**
(21) Anmeldenummer: 17202985.2
(22) Anmeldetag: 22.11.2017
(51) Int. Cl.: A47J 31/58

(54) **KAFFEEAUTOMAT**
AUTOMATIC COFFEE MACHINE
MACHINE À CAFÉ AUTOMATIQUE

(30) Priorität: 08.12.2016 DE 102016224520
(43) Veröffentlichungstag der Anmeldung: 13.06.2018
(73) Patentinhaber: BSH Hausgeräte GmbH, 81739 München (DE)
(72) Erfinder: Tracy, Timothy Mark, 83361 Kienberg (DE); Mathes, Anton, 83364 Neukirchen am Teisenberg (DE); Beck, Rudolf, 84518 Garching a. d. Alz (DE); Wrehde, Stefan, 83365 Nußdorf (DE)

(56) Entgegenhaltungen:
- DE-A1-102010 007 376
- DE-A1-102012 200 952
- DE-U1-202004 007 987

## Beschreibung

Die vorliegende Erfindung betrifft einen Kaffeeautomaten.

Um die Funktion eines Kaffeeautomaten, insbesondere eines Kaffeevollautomaten, gewährleisten zu können, muss sichergestellt werden, dass alle benötigten Komponenten vorhanden sind. Fehlt beispielsweise eine Brüheinheit, kann kein Kaffee erzeugt werden, während ohne Milchschäumer und/oder Milchbehälter kein Milchschaum hergestellt werden kann.

Darüber hinaus sind auch sicherheitskritische Abfragen erforderlich, um einen Brühprozess starten zu können. Die Kaffeezubereitung darf beispielsweise nur dann gestartet werden können, wenn eine Restwasserschale eingesetzt und sämtliche Wartungstüren geschlossen sind. Diese sicherheitskritischen oder die Funktion entscheidend beeinflussenden Umstände, werden bislang über jeweils separate Schalter überwacht, die beispielsweise beim Einsetzen einer entsprechenden Komponente geschlossen werden. Fehlt die Komponente hingegen, wird eine Fehlermeldung angezeigt, da der Schalter und damit auch der Stromkreis geöffnet ist. Um dabei die einzelnen Fehler unterscheiden zu können, wird in der Regel für jedes Modul und jede Komponente ein eigener Schalter eingesetzt, was jedoch vergleichsweise aufwändig, fehleranfällig und teuer ist.

Nicht sicherheitskritisch aber dennoch von Interesse für eine hohe Ergebnisqualität sind auch das Vorhandensein von beispielsweise Kaffeebohnen, Wasser oder eventuell einem Wasserfilter. Die Detektion eines Füllstandes in einem Bohnentank erfolgt dabei üblicherweise mittels Lichtschranken oder durch die Überwachung eines Motorstroms, der stark abnimmt, wenn das Mahlwerk leer mahlt. Ein Wasserstand im Wassertank wird üblicherweise über einen Schwimmer im Tank in Kombination mit sogenannten Reed-Schaltern erfasst, wobei alternativ selbstverständlich auch Flussmesssysteme oder kapazitive Sensoren verwendet werden können.

Dokument DE-U-202004007987 offenbart eine IR-lichtverwendende Reflexlichtschranke zum Detektieren des in seiner richtigen Position befindlichen Wasserbehälters.

Die zuvor genannten Bauteile, wie beispielsweise ein Mikroschalter, Reedschalter, Lichtschranken oder RFID-Chips ermöglichen zwar eine Überwachung sowohl sicherheitskritischer als auch funktionsrelevanter Funktionen an einem Kaffeeautomaten, sind jedoch vergleichsweise aufwändig zu integrieren und damit teuer und zudem oftmals auch fehleranfällig.

Die vorliegende Erfindung beschäftigt sich daher mit dem Problem, für einen Kaffeeautomaten eine verbesserte oder zumindest eine alternative Ausführungsform anzugeben, die insbesondere eine Überwachung von sicherheitskritischen bzw. eine Funktion beeinflussenden Faktoren konstruktiv einfach und kostengünstig erlaubt.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, anstelle bislang zur Überwachung von sicherheitskritischen oder eine Funktion überwachenden Sensoren oder Schaltern nunmehr erstmals lediglich einen Laserstrahl zu verwenden, der berührungsfrei über entsprechende Reflexionsflächen in einem Gehäuse eines Kaffeeautomaten geführt ist und wobei diese einzelnen Reflexionsflächen an einer jeweils zu überwachenden Komponente angebracht sind, so dass bei einem Fehlen einer derartigen Komponente oder bei einem fehlerhaften Füllstand in dieser Komponente der Laserstrahl nicht oder in anderer Weise reflektiert wird. Diese Abweichung von einem Soll-Laserstrahl wird dann mit einer entsprechenden Einrichtung erfasst, ausgewertet und der jeweils erkannte Fehler angezeigt. Der erfindungsgemäße Kaffeeautomat besitzt dabei eine Laserquelle, die einen Laserstrahl erzeugen kann. Der Kaffeeautomat weist darüber hinaus zumindest eine Komponente mit jeweils einer Reflexionsfläche für diesen Laserstrahl auf. Die zuvor erwähnte Einrichtung ist dabei derart ausgebildet, dass sie eine zurückgelegte Wegstrecke des Laserstrahls erfasst, auswertet und ein Fehlen oder einen entsprechenden Füllzustand einer Komponente erkennt und anzeigt. Im Vergleich zu bisher aus dem Stand der Technik jeder einzelnen Komponente zugeordnete Sensoren bzw. Mikroschalter, kann nun die Überwachung sämtlicher Komponenten mittels lediglich einer Laserquelle und einer Einrichtung erfolgen, wobei an den einzelnen Komponenten lediglich noch entsprechende Reflexionsflächen vorgesehen sein müssen. Als Laserquelle kann beispielsweise ein Punktlaser integrierter Entfernungsmessung zum Einsatz kommen, ähnlich einer TOF-Messung (Time of Flight) oder einer Interferenz-Auswertung, über welche die zurückgelegte Weglänge des Laserstrahls ermittelt werden kann. Durch eine entsprechend ausgelegte Reflexionskette ist es dabei möglich, sämtliche Komponenten, vorzugsweise alle Serviceöffnungen und sogar das Vorhandensein bzw. den Füllstand in einem Wassertank oder einem Bohnentank zu erfassen. Dabei lässt sich jeder Fehlerzustand exakt identifizieren, da jedem Zustand genau eine Weglänge zugeordnet ist. Da die Einrichtung in der Lage ist, die Länge des Laserstrahls auf wenige Millimeter genau zu bestimmen, sind bereits kleine Änderungen detektierbar. Beispielsweise kann eine neue Version einer Brüheinheit einen um wenige Millimeter versetzten Spiegel aufweisen, woraufhin die Einrichtung erkennt, dass sich die beiden Versionen der Brüheinheit voneinander unterscheiden und Brühparameter eventuell entsprechend angepasst werden müssen. In einem Wartungszustand ist es darüber hinaus denkbar, eine entsprechende Dummy-Komponente mit einer entsprechenden Reflexionsfläche einzusetzen, die ein Vorhandensein der jeweiligen Komponente simuliert und dadurch beispielsweise einen Testlauf ermöglicht.

Bei einer vorteilhaften Weiterbildung der erfindungsgemäßen Lösung ist die Komponente als Wasserfilter, Bohnentank, Entkalkerkartusche, Brüheinheit oder Tropfschale ausgebildet. Bereits diese nicht abschließende Aufzählung lässt erahnen, dass mit der erfindungsgemäßen Laserquelle und mit der erfindungsgemäßen Einrichtung eine Vielzahl, vorzugsweise sogar sämtliche, sicherheitsrelevante und für eine einwandfreie Funktion erforderliche Komponenten überwachbar sind. Rein theoretisch kann dabei die Komponente auch als Seitentür ausgebildet sein, wobei an dieser ein entsprechendes Reflexionselement mit einer entsprechenden Reflexionsfläche derart angeordnet ist, dass sie vom Laserstrahl getroffen wird. Selbstverständlich kann auch die Seitentür selbst die Reflexionsfläche bilden.

Bei einer vorteilhaften Weiterbildung der erfindungsgemäßen Lösung sind zumindest zwei Komponenten vorgesehen, die mit ihrer jeweiligen Reflexionsfläche eine Reflexionskette bilden. In diesem Fall wird der von der Laserquelle ausgesandte Laserstrahl von der Reflexionsfläche der ersten Komponente zur Reflexionsfläche der zweiten und von dieser zu sämtlichen Reflexionsflächen weiterer Komponenten geleitet, wobei am Schluss der Reflexionskette ein Reflektor vorgesehen ist, auf den der Laserstrahl trifft und dadurch reflektiert wird. Durch die Reflexion des Laserstrahls legt dieser nun den gesamten Weg über die einzelnen Reflexionsflächen der einzelnen Komponenten wie zur Einreichung zurück.

Zweckmäßig ist als letzte Komponente in der Reflexionskette ein Bohnentank vorgesehen, bei dem die Kaffeebohnen die Reflexionsfläche bilden. Sind somit Kaffeebohnen im Bohnentank vorhanden, wird von diesen der Laserstrahl reflektiert und die Einrichtung erkennt den Füllstand im Bohnentank. Sind im Bohnentank keine oder zu wenige Kaffeebohnen vorhanden, so fällt die durch die Kaffeebohnen gebildete Reflexionsfläche weg, wodurch der Laserstrahl seine Weglänge ändert und wobei die geänderte Weglänge wiederum von der Einrichtung erfasst, ausgewertet und im Sinne eines leeren Bohnentanks angezeigt werden kann. Dabei ist vorzugsweise hinter dem Bohnentank ein Reflektor angeordnet, der ausschließlich dann den auftreffenden Lichtstrahl reflektiert, sofern der Lichtstrahl den Reflektor überhaupt erreicht, was nicht der Fall ist, solang sich derart viele Kaffeebohnen im Bohnentank befinden, dass diese bereits den Laserstrahl reflektieren.

Die vorliegende Erfindung beruht weiter auf dem allgemeinen Gedanken, ein Betriebsverfahren eines Kaffeeautomaten anzugeben, bei dem von einer Laserquelle ein Laserstrahl erzeugt wird, der auf zumindest eine Reflexionsfläche einer zugehörigen Komponente gerichtet ist. Eine zurückgelegte Wegstrecke des Laserstrahls wird dabei von einer Einrichtung erfasst, ausgewertet und ein Fehlen oder ein entsprechender Füllstand einer Komponente angezeigt. Fehlt beispielsweise eine Komponente, so fehlt auch die daran angeordnete Reflexionsfläche, wodurch kein Reflektieren des auftreffenden Laserstrahls erfolgt und dadurch dieser eine auf einen Fehlzustand hindeutende Weglänge besitzt. Das erfindungsgemäße Betriebsverfahren ermöglicht dabei eine Überwachung sämtlicher sicherheitsrelevanter sowie funktionsrelevanter Komponenten mit lediglich einer einzigen Laserquelle, einer zugehörigen Einrichtung sowie an den jeweils zu überwachenden Komponenten angeordneten Reflexionsflächen, wodurch insbesondere die bislang aufwändig zu verkabelnden, teuren und fehleranfälligen Mikroschalter, die an jeder Komponente angeordnet werden mussten, entfallen können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch einen erfindungsgemäßen Kaffeeautomaten mit leerem Bohnentank,
- Fig. 2: eine Darstellung wie in Fig. 1, jedoch mit vollem Bohnentank,
- Fig. 3: eine Darstellung wie in Fig. 1 und 2, jedoch ohne Brüheinheit.

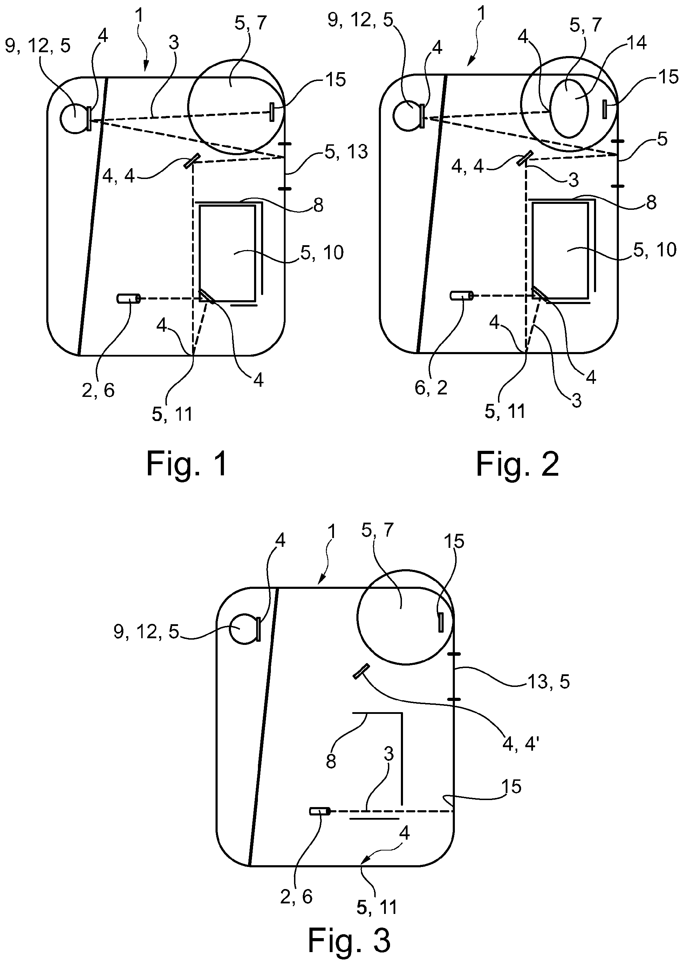

Entsprechend den Figuren 1 bis 3, weist ein erfindungsgemäßer Kaffeeautomat 1 eine Laserquelle 2 zur Erzeugung eines Laserstrahls 3 auf. Ebenfalls vorgesehen ist zumindest eine Komponente 5 mit jeweils zumindest einer zugehörigen Reflexionsfläche 4 für den Laserstrahl 3. Über eine Einrichtung 6 wird eine zurückgelegte Wegstrecke des Laserstrahls 3 erfasst, ausgewertet und ein Fehlen oder ein fehlerhafter Füllzustand einer Komponente 5, beispielsweise ein Fehlen von Kaffeebohnen 14 in einem Bohnentank 7 erkannt und angezeigt. Die Komponente 5 kann dabei als in einem zugehörigen Aufnahmeraum 8 einsetzbare Entkalkerkartusche 9, Brüheinheit 10 oder Tropfschale 11 ausgebildet sein. Ebenfalls denkbar ist eine Ausbildung der Komponente 5 als Wasserfilter 12, als Bohnentank 7 oder als Seitentür 13.

Wie man insbesondere den Figuren 1 und 2 entnehmen kann, sind dabei mehrere Komponenten 5 im Kaffeeautomaten 1 vorgesehen, die mit ihrer jeweiligen Reflexionsfläche 4 eine Reflexionskette bilden. Als letztes Glied in der Reflexionskette ist vorzugsweise der Bohnentank 7 vorgesehen, in dem die Kaffeebohnen 14 die Reflexionsfläche 4 bilden (vergleiche Figur 2). Fehlen die Kaffeebohnen 14 im trotzdem in den Kaffeeautomaten 1 eingesetzten Bohnentank 7, so durchdringt der Laserstrahl 3 den Bohnentank 7 bzw. die Komponente 5 und trifft auf einen dahinter angeordneten Reflektor 15, der den Laserstrahl 3 reflektiert, wodurch dieser zur Einrichtung 6 zurückgeschickt wird. Wie den Figuren 1 und 2 dabei eindeutig zu entnehmen ist, ist die vom Laserstrahl 3 zurückgelegte Weglänge in Figur 1 aufgrund der fehlenden Kaffeebohnen 14 deutlich länger als in Figur 2, wodurch die Einrichtung 6 aufgrund der längeren Wegstrecke des Laserstrahls 3 auf ein Fehlen der Kaffeebohnen 14 schließen und dieses entsprechend anzeigen kann.

Je nach gewünschtem Verlauf, kann selbstverständlich auch an einer Innenwand eines Gehäuses eine entsprechende Reflexionsfläche 4' angeordnet sein. Ebenso kann auch an einer Innenwand zumindest eines Aufnahmeraums 8 eine derartige Reflexionsfläche 4' vorgesehen sein. Generell besteht die Reflexionskette aus den einzelnen Reflexionsflächen 4 der Komponenten 5, die ein Umlenken des Laserstrahls 3 bewirken sowie des am Schluss angeordneten Reflektors 15, der die maximale Länge des Laserstrahls 3 begrenzt. Der Reflektor 15 ist in jedem Fall eine aus rechtwinkligen Prismen zusammengesetzte Fläche, damit der Laserstrahl 3 direkt zurückgeworfen wird. Fehlt eine Komponente 5 in der Reflexionskette, wie dies beispielsweise gemäß der Figur 3 dargestellt ist, bei welcher die Brüheinheit 10 nicht eingebaut ist, so trifft der Laserstrahl 3 nicht auf die an der Brüheinheit 10 angeordnete Reflexionsfläche 4, sondern auf einen dahinter angeordneten Reflektor 15, welcher den Laserstrahl 3 direkt zurückwirft. Alternativ ist selbstverständlich auch denkbar, dass ein dahinter liegender Spiegel die Reflexionskette weiterführt, um auch die restlichen Komponenten 5, das heißt beispielsweise den Wasserfilter 12, die Seitentür 13 oder den Bohnentank 7 zu überwachen. In allen Fällen ergibt sich dabei eine eindeutige Weglänge. Die Reflexionskette kann darüber hinaus dazu verwendet werden, bestimmte Funktionszustände zu überwachen.

Beispielsweise ist dies auch möglich, anstatt dem Wasserfilter 12 eine Entkalkerkartusche 9 einzusetzen, die keine Reflexionsfläche 4, sondern lediglich einen den Laserstrahl 3 nicht weiterleitenden, sondern direkt zurückwerfenden Reflektor 15 besitzt. Damit wird eine genaue Weglänge festgelegt, die der Einrichtung 6 zu erkennen gibt, dass entkalkt werden soll bzw. dass kein Kaffee zubereitet werden darf. Ein eingesetztes Reflektorelement anstelle der Brüheinheit 10 oder der Tropfschale 11 könnte beispielsweise den Servicemodus aktivieren, insbesondere im Fall eines Kundendienstaufenthalts.

Ein eingeschobener Reflektor 15 beim Öffnen des Pulverschachts teilt der Einrichtung 6 mit, dass Pulverkaffee eingefüllt wurde und die nächste Zubereitung ohne den Einsatz eines nicht näher bezeichneten Mahlwerks erfolgt. Da die Länge des Laserstrahls 3 auf wenige Millimeter genau bestimmt werden kann, sind bereits kleinste Änderungen detektierbar. So könnte beispielsweise eine neue Version der Brüheinheit 10 eine um wenige Millimeter versetzte Reflexionsfläche 4 aufweisen, die die Einrichtung 6 dahingehend deutet, dass gegebenenfalls Brühparameter entsprechend anzupassen sind.

Mit dem erfindungsgemäßen Verfahren und dem erfindungsgemäßen Kaffeeautomaten 1 ist es möglich, mit lediglich einem einzigen aktiven Element, nämlich der Laserquelle 2 und der Einrichtung 6 sämtliche Komponenten 5 im Kaffeeautomaten 1 zu überwachen. Zu den sicherheitskritischen Komponenten 5 werden gleichzeitig alle Funktionsmodule und sogar das Vorhandensein von Rohstoffen, beispielsweise Kaffeebohnen 14, überwacht. Von besonderem Vorteil ist dabei, dass keine aufwändigen, teuren und auch fehleranfälligen Mikroschalter erforderlich sind und der Kaffeeautomat 1 durch Einschieben entsprechender Reflektoren manuell in bestimmte Zustände versetzt werden kann.

### Bezugszeichenliste

- 1: Kaffeeautomat
- 2: Laserquelle
- 3: Laserstrahl
- 4: Reflexionsfläche
- 5: Komponente
- 6: Einrichtung
- 7: Bohnentank
- 8: Aufnahmeraum
- 9: Entkalkerkartusche
- 10: Brüheinheit
- 11: Tropfschale
- 12: Wasserfilter
- 13: Seitentür
- 14: Kaffeebohnen
- 15: Reflektor

## Patentansprüche

1. Kaffeeautomat (1) mit
- einem von einer Laserquelle (2) erzeugten Laserstrahl (3),
- zumindest einer Komponente (5) mit jeweils einer Reflexionsfläche (4) für den Laserstrahl (3),
- einer Einrichtung (6), die derart ausgebildet ist, dass sie eine zurückgelegte Wegstrecke des Lasterstrahls (3) erfasst, auswertet und ein Fehlen oder einen Füllzustand zumindest einer Komponente (5) erkennt und anzeigt.

2. Kaffeeautomat nach Anspruch 1, **dadurch gekennzeichnet, dass** die Komponente (5) als Wasserfilter (12), Bohnentank (7), Entkalkerkartusche (9), Brüheinheit (10) oder Tropfschale (11) ausgebildet ist.

3. Kaffeeautomat nach Anspruch 1 oder 2, **dadurch gekennzeichnet, dass** die Komponente (5) als Seitentür (13) ausgebildet ist.

4. Kaffeeautomat nach einem der Ansprüche 1 bis 3, **dadurch gekennzeichnet, dass** zumindest zwei Komponenten (5) vorgesehen sind, die mit ihrer jeweiligen Reflexionsfläche (4) eine Reflexionskette bilden.

5. Kaffeeautomat nach Anspruch 4, **dadurch gekennzeichnet, dass** als letztes Glied in der Reflexionskette ein Bohnentank (7) vorgesehen ist, in dem Kaffeebohnen (14) die Reflexionsfläche (4) bilden.

6. Kaffeeautomat nach einem der Ansprüche 1 bis 5, **dadurch gekennzeichnet, dass** an einer Innenwand zumindest eines Aufnahmeraums (8) eine Reflexionsfläche (4) angeordnet ist.

7. Kaffeeautomat nach einem der Ansprüche 1 bis 6, **dadurch gekennzeichnet, dass** ein Reflektor (15) vorgesehen ist, auf den der Laserstrahl (3) durch die zumindest eine Reflexionsfläche (4) umgelenkt wird.

8. Betriebsverfahren eines Kaffeeautomaten (1) nach einem der vorhergehenden Ansprüche, bei dem
- von einer Laserquelle (2) ein Laserstrahl (3) erzeugt wird,
- der Laserstrahl (3) auf zumindest eine Reflexionsfläche (4) einer zugehörigen Komponente (5) gerichtet wird,
- eine Einrichtung (6) eine zurückgelegte Wegstrecke des Lasterstrahls (3) erfasst, auswertet und ein Fehlen oder einen Füllzustand zumindest einer Komponente (5) anzeigt.

9. Betriebsverfahren nach Anspruch 8, **dadurch gekennzeichnet, dass** der Laserstrahl (3) durch die zumindest eine Reflexionsfläche (4) auf einen Reflektor (15) umgelenkt wird.

## Claims

1. Automatic coffee machine (1) having
- a laser beam (3) generated by a laser source (2),
- at least one component (5) in each case having a reflection surface (4) for the laser beam (3),
- a device (6) designed such that it detects and evaluates a travelled distance of the laser beam (3) and identifies and displays an absence or a filling state of at least one component (5).

2. Automatic coffee machine according to claim 1, **characterised in that** the component (5) is designed as a water filter (12), bean tank (7), descaling cartridge (9), brewing unit (10) or drip tray (11).

3. Automatic coffee machine according to claim 1 or 2, **characterised in that** the component (5) is designed as a side door (13).

4. Automatic coffee machine according to one of claims 1 to 3, **characterised in that** at least two components (5) are provided which form a reflection chain with their respective reflection surface (4).

5. Automatic coffee machine according to claim 4, **characterised in that** a bean tank (7) is provided as the last member in the reflection chain, in which coffee beans (14) form the reflection surface (4).

6. Automatic coffee machine according to one of claims 1 to 5, **characterised in that** a reflection surface (4) is arranged on an inner wall of at least one receiving space (8).

7. Automatic coffee machine according to one of claims 1 to 6, **characterised in that** a reflector (15) is provided, onto which the laser beam (3) is deflected by the at least one reflection surface (4).

8. Operating method of an automatic coffee machine (1) according to one of the preceding claims, in which
- a laser beam (3) is generated by a laser source (2),
- the laser beam (3) is directed onto at least one reflection surface (4) of an associated component (5)
- a device (6) detects and evaluates a distance travelled by the laser beam (3) and displays an absence or a filling state of at least one component (5).

9. Operating method according to claim 8, **characterised in that** the laser beam (3) is deflected by the at least one reflection surface (4) onto a reflector (15).

## Revendications

1. Machine à café (1) automatique comprenant :
- un faisceau laser (3) généré par une source laser (2),
- au moins un composant (5) présentant chacun une surface de réflexion (4) pour le faisceau laser (3),
- un dispositif (6) qui est conçu de telle sorte qu'il saisit, évalue une distance traversée en retour du faisceau laser (3), détecte et affiche un manque ou un état de remplissage d'au moins un composant (5).

2. Machine à café automatique selon la revendication 1, **caractérisée en ce que** le composant (5) est réalisé en tant que filtre à eau (12), réservoir pour grains de café (7), cartouche de détartrage (9), unité d'infusion (10) ou bac récolte-gouttes (11).

3. Machine à café automatique selon la revendication 1 ou 2, **caractérisée en ce que** le composant (5) est réalisé en tant que porte latérale (13).

4. Machine à café automatique selon l'une des revendications 1 à 3, **caractérisée en ce que** sont prévus au moins deux composants (5) qui forment, avec leur surface de réflexion (4) respective, une chaine de réflexion.

5. Machine à café automatique selon la revendication 4, **caractérisée en ce qu'**il est prévu en tant que dernier élément dans la chaine de réflexion, un réservoir pour grains de café (7) dans lequel des grains de café (14) forment la surface de réflexion (4).

6. Machine à café automatique selon l'une des revendications 1 à 5, **caractérisée en ce qu'**une surface de réflexion (4) est disposée au niveau d'une paroi intérieure d'au moins un compartiment de réception (8).

7. Machine à café automatique selon l'une des revendications 1 à 6, **caractérisée en ce qu'**il est prévu un réflecteur (15) sur lequel le faisceau laser (3) est dévié par au moins une surface de réflexion (4).

8. Procédé pour faire fonctionner une machine à café (1) automatique selon l'une des revendications précédentes, dans lequel :
- un faisceau laser (3) est généré par une source laser (2),
- le faisceau laser (3) est orienté sur au moins une surface de réflexion (4) d'un composant (5) associé,
- un dispositif (6) saisit, évalue une distance traversée en retour du faisceau laser (3), détecte et affiche un manque ou un état de remplissage d'au moins un composant (5).

9. Procédé de fonctionnement selon la revendication 8, **caractérisé en ce que** le faisceau laser (3) est dévié par au moins une surface de réflexion (4) sur un réflecteur (15).
